(19) Europäisches Patentamt
European Patent Office
Office européen des brevets

(11) Veröffentlichungsnummer: **0 279 807 B1**

(12) # EUROPÄISCHE PATENTSCHRIFT

(45) Veröffentlichungstag der Patentschrift: **03.08.94**

(51) Int. Cl.⁵: **B29B 9/00**, B29B 9/04, B29B 13/10, C08J 3/14, B29B 13/06

(21) Anmeldenummer: **88890030.5**

(22) Anmeldetag: **11.02.88**

(54) **Verfahren zur Herstellung von hochtemperaturbeständigen Polymerisaten in Pulverform sowie Anlage zur Durchführung des Verfahrens.**

(30) Priorität: **16.02.87 AT 322/87**

(43) Veröffentlichungstag der Anmeldung:
**24.08.88 Patentblatt 88/34**

(45) Bekanntmachung des Hinweises auf die Patenterteilung:
**03.08.94 Patentblatt 94/31**

(84) Benannte Vertragsstaaten:
**BE CH DE FR GB IT LI NL SE**

(56) Entgegenhaltungen:
**EP-A- 0 079 596**
**US-A- 2 755 509**
**US-A- 3 331 099**
**US-A- 4 091 058**
**US-A- 4 206 161**

(73) Patentinhaber: **Lenzing Aktiengesellschaft**

**A-4860 Lenzing(AT)**

(72) Erfinder: **Wanek, Erich, Dr.**
**Feldgasse 14**
**A-4840 Vöcklabruck(AT)**
Erfinder: **Baumgartinger, Josef**
**Heuweg 4**
**A-4841 Ungenach(AT)**
Erfinder: **Schobesberger, Manfred**
**Gerlham NB**
**A-4863 Seewalchen(AT)**
Erfinder: **Stadlbauer, Rupert**
**Waldstrasse 2**
**A-4860 Lenzing(AT)**
Erfinder: **Weinrotter, Klaus, Dr.**
**Feldgasse 14**
**A-4840 Vöcklabruck(AT)**

(74) Vertreter: **Katschinka, Werner**
**Patentanwälte Dr. Erwin Müllner**
**Dipl.-Ing. Werner Katschinka**
**Dr. Martin Müllner**
**Weihburggasse 9**
**A-1014 Wien (AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 279 807 B1

## Beschreibung

Die Erfindung betrifft ein Verfahren zur Herstellung von hochtemperaturbeständigen Polymerisaten in Pulverform, sowie eine Anlage zur Durchführung des Verfahrens.

Derartige Pulver werden bei der Erzeugung von Formkörpern aus hochtemperaturbeständigen Polymerisaten durch Heißverpressen benötigt, wobei als solche Polymerisate insbesondere Polyimide in Betracht kommen (vgl. beispielsweise H.G. Elias und F. Vohwinkel, "Neue polymere Werkstoffe für die industrielle Anwendung: Struktur, Synthese, Eigenschaften, Verarbeitung"; 2. Folge, Seiten 257 bis 288, Carl Hanser Verlag München Wien 1983).

Nach einem der Anmelderin bekannt gewordenen, in den USA vorgeschlagenen Verfahren wird die Lösung des Polymerisates durch eine Spinndüse gepreßt und die dabei entstehenden Endlosfäden werden mittels eines rotierenden Schabers in Stücke geschnitten. Nach Auswaschen und Trocknen werden die Stücke zu Pulver vermahlen. Dabei ergibt sich die Schwierigkeit, daß das Lösungsmittel aus den abgeschnittenen Fadenstücken nur durch langdauerndes Extrahieren entfernt werden kann, was eine kontinuierliche Herstellung des Pulvers unmöglich macht. Lange Extraktions- und Trockenzeiten verschlechtern überdies die Qualität der Polymerisate.

In der DE-C - 21 43 080 sind Mischpolyimide beschrieben, welche durch Ausfällen aus ihren Lösungen in polaren organischen Lösungsmitteln in Pulverform erhalten werden können. Die auf diese Weise diskontinuierlich anfallenden Produkte weisen durchwegs schlechte Wärmeleitfähigkeit und hohe Affinität zu aprotischen polaren Lösungsmitteln sowie zu Wasser auf. Es ist daher notwendig, die ausgefällten Polymerisate diskontinuierlich mehrere Stunden lang zu extrahieren und schließlich unter Vakuum mehrere Stunden lang bei hohen Temperaturen um 200 °C zu trocknen. Für die beschriebenen Mischpolyimide ist jedoch deren Hydrolyseempfindlichkeit, insbesondere bei höheren Temperaturen, charakteristisch, weswegen Schädigungen im Hinblick auf die erwünschten Produkteigenschaften in Kauf genommen werden müssen.

Es ist weiters bekannt, Fibride, d.s. verzweigte, faserige Partikel aus verschiedenen synthetischen Polymerisaten, durch Anwendung von Scherkräften unter Abkühlen oder Ausfällen oder unter Verdampfung der flüssigen Phase zu erhalten. Solche Polymerisatpartikel sind morphologisch nach Größe und Gestalt den Cellulosefasern ähnlich.

In der EP-A - 0 131 085 ist beispielsweise die Herstellung von Fibriden aus thermoplastischen Kunststoffen durch Entspannungsverdampfung einer Polymerisatlösung unter scherinduzierenden Bedingungen beschrieben, wobei die echte oder scheinbare Lösung des Polymerisates unter Anwendung überhitzten Wasserdampfes in einer Zweistoffdüse entspannt wird.

Fibride eignen sich aufgrund ihrer Struktur keinesfalls zur Herstellung von Polymerisatpulvern mit annähernd sphärischer bzw. kubischer Form der Einzelpartikel. Beim Vermahlen von Fibriden werden wieder nur Partikel mit faseriger Struktur erhalten, welche zum Verpressen nicht brauchbar sind. Dazu kommt noch, daß Fibride nur mit schlechtem Mahlwirkungsgrad zerkleinerbar sind. Die Herstellung von Fibriden aus hochtemperaturbeständigen Polymerisaten ist darüber hinaus noch nicht bekannt geworden.

Die Erfindung bezweckt die Lösung der dargelegten Schwierigkeiten und stellt sich die Aufgabe, gut verpreßbare Pulver aus hochtemperaturbeständigen Kunststoffen ohne Schädigung der Polymerisatstruktur kontinuierlich herzustellen.

Die gestellte Aufgabe wird erfindungsgemäß dadurch gelöst, daß eine konzentrierte Lösung des Polymerisates, insbesondere eines Polyimides, in einem aprotischen, polaren Lösungsmittel, wie Dimethylformamid, Dimethylacetamid, Dimethylsulfoxid oder N-Methylpyrrolidon, kontinuierlich in den Bereich eines Drallkegels aus heißem, wässerigem Fällungsmittel ausgepreßt wird, wobei kurze, unregelmäßige, wurmförmige Gebilde entstehen, welche zu einer vliesartigen Bahn vereinigt, mit wässerigen Lösungsmitteln und zuletzt mit Wasser gewaschen, getrocknet und zerkleinert werden.

Ohne Vorsehen des Drallkegels aus Fällungsmittel würden beim Auspressen der Polymerisatlösung in ein Fällbad glatte, endlose Fäden oder Stränge erhalten werden. Erfindungsgemäß wird der austretende Faden oder Strang von dem Drallkegel erfaßt und in Rotation um seine Längsachse versetzt, wodurch er unmittelbar an der Austrittsöffnung abgedreht wird. Infolge der herrschenden turbulenten Strömungsverhältnisse wird bereits zu diesem Zeitpunkt eine ausgezeichnete Extraktion von organischen Verunreinigungen, wie Oligomeren und Ausgangsprodukten, aus dem sich verfestigenden Strang oder Faden bewirkt.

Die Dimension der wurmförmigen Gebilde kann zwischen etwa 1 bis 8 cm Länge und etwa 0,5 bis 5 mm Durchmesser variiert werden.

Aufgrund ihrer unregelmäßigen, gekrümmten und gerippten Form lassen sich die abgedrehten Gebilde ähnlich den Fibriden zu einer vliesartigen Bahn vereinigen, wodurch erst deren leicht zu kontrollierende kontinuierliche Nachbehandlung, nämlich Waschen (Extraktion), Trocknen und Zerkleinern, möglich wird.

Vorzugsweise wird die konzentrierte Lösung des Polymerisates durch die zentrale Bohrung einer Zweistoffdüse in ein Bad aus wässerigem Fällungsmittel ausgepreßt und heißes wässeriges Fällungsmittel unter Druck dem peripheren Kanal der Zweistoffdüse zugeführt, wobei dem Fällungsmittel beim Durchströmen des peripheren Kanals ein Drall verliehen wird, worauf das Fällungsmittel zur Achse der zentralen Bohrung hin konvergierend in das Bad austritt.

Auf diese Weise wird einfach und betriebssicher ein Drallkegel aus heißem, wässerigem Fällungsmittel gebildet. Der Öffnungswinkel des erzeugten Drallkegels, der Druck, die Temperatur und die Rotationsgeschwindigkeit des Fällungsmittels sind von Einfluß auf Länge und Gestalt der hergestellten wurmförmigen Gebilde.

Bei Einsatz einer Zweistoffdüse wird das wässerige Fällungsmittel dem peripheren Kanal zweckmäßig mit einer Temperatur von 20 bis 95 °C und unter einem Druck von 10 bis 100 bar zugeführt.

Bevorzugt wird die Lösung eines Mischpolyimides mit Struktureinheiten der allgemeinen Formel

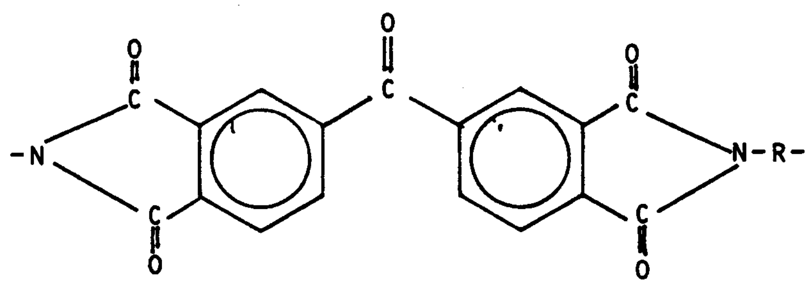

, (I)

worin R für 2,4- und/oder 2,6-Toluylen oder für eine Gruppe der Formel

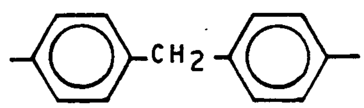

steht, als hochtemperaturbeständiges Polymerisat eingesetzt.

Ein erfindungsgemäß aus einem solchen Polymerisat hergestelltes Pulver weist erheblich höhere inhärente Viskosität und damit höheres Durchschnittsmolekulargewicht auf als Pulver aus diesem Material, wie es bisher erzeugt werden konnte.

Als konzentrierte Polymerisatlösung wird vorzugsweise eine Lösung in Dimethylformamid mit einem Gehalt von 20 bis 30 Massen% an Polymerisat eingesetzt. Eine solche Lösung hat die geeignete Viskosität und besonders günstige Verfestigungseigenschaften.

Als Fällungsmittel wird zweckmäßig Wasser oder ein Gemisch von Wasser und Dimethylformamid verwendet.

Es hat sich speziell für Polyimide als günstig erwiesen, wenn ein Dimethylformamid-Wasser-Gemisch mit einem Gehalt von 30 bis 80 %, insbesondere 60 %, an Dimethylformamid (DMF) als Fällungsmittel zum Einsatz gelangt.

Nach Vereinigung der primär entstehenden wurmförmigen Polymerisat-Gebilde zu einer vliesartigen Bahn wird diese Bahn vorzugsweise auf einem Siebband aus elastischem Material durch Waschzonen geführt, worauf die Bahn zwischen Walzen abgepreßt wird und vor der eigentlichen Trocknung eine Absaugstrecke durchläuft.

In der ersten Waschzone kann als Wasch- bzw. Extraktionsmittel besonders zweckmäßig ein DMF-Wasser-Gemisch von annähernd gleicher Zusammensetezung wie das Fällungsmittel eingesetzt werden, worauf in den folgenden Waschzonen die Konzentrationen des aprotischen Lösungsmittels zunehmend verringert werden und in der letzten Waschzone reines Wasser als Waschmittel verwendet wird.

Erst die Bildung der vliesartigen Bahn ermöglicht diese kontinuierliche Nachbehandlung der Polymerisatgebilde, wobei auch die anschließende Trocknung in den kontinuierlichen Prozeß eingegliedert werden kann.

Diese Trocknung wird vorzugsweise in einem Hochfrequenz-(HF-)trockner durchgeführt, wodurch dieser Behandlungsschritt besonders schonend gestaltet wird. Das anhaftende Restwasser geht dabei in Dampfform über, es findet jedoch keine Erwärmung der Polymerisatgebilde selbst statt, sodaß es weder zu thermischer noch zu hydrolytischer Schädigung der Polymerisate kommen kann. Dazu kommt noch, daß

der HF-Trockner mit der vliesartigen Bahn besonders gleichmäßig beschickt werden kann.

Die im HF-Trockner erzielbare Restfeuchte beträgt weniger als 1 Masse-% und die anschließende Zerkleinerung wird vorteilhaft zweistufig mittels einer Messermühle und einer Feinprallmühle durchgeführt, um einen einheitlichen Mahlgrad bei möglichst hoher Energienutzung zu erzielen.

Aus der US-A-4 206 161 ist eine Anlage bekannt, bei der eine Zweistoffdüse mit Zuleitungen für eine konzentrierte Lösung eines Polymerisates und für wässeriges Fällungsmittel vorgesehen ist, welche Zweistoffdüse mit einer Düsenöffnung für die Lösung des Polymerisates und einer Düsenöffnung für das Fällungsmittel in eine mit wenigstens einer Zuleitung für Fällungsmittel versehene Fällwanne ausmündet, wobei die Düsenöffnung für das Fällungsmittel die Düsenöffnung für die Lösung des Polymerisates ringförmig umgibt und sich der Durchmesser des ringförmigen Düsenkanals in Strömungsrichtung konisch verjüngt, wobei weiters unter der Austrittsöffnung der Fällwanne das Aufgabenende eines beweglichen Siebbandes angeordnet ist, über dem sich Wascheinrichtungen befinden, und wobei das Abgabeende des Siebbandes vor dem Einlauf eines Trockners angeordnet ist. Damit diese Anlage zur Durchführung des erfindungsgemäßen Verfahrens geeignet ist, ist vorgesehen, daß sich die Wascheinrichtungen oberhalb des Siebbandes im wesentlichen über dessen gesamte Länge erstrecken, daß im Anschluß an den Auslauf des Trockners eine ein- oder mehrstufige Zerkleinerungseinrichtung vorgesehen ist und daß vor der Düsenöffnung für das Fällungsmittel ein Dralleinsatz vorgesehen ist.

Da bei dieser Anlage unter anderem keine großen Behandlungstanks notwendig sind, ist ihr Platzbedarf vergleichsweise gering.

Mit dem zugeführten Fällungsmittel kann eine Strömung in der Fällwanne erzeugt werden, wodurch die primär entstehenden wurmförmigen Gebilde zur Austragsöffnung der Fällwanne gefördert und aus dieser ausgeschwemmt werden.

Nach einer bevorzugten Ausführungsform ist vor der Mündung der Zweistoffdüse ein nicht bis zum Boden der Fällwanne reichender Strömungsbrecher angeordnet.

Der Strömungsbrecher kann besonders zweckmäßig in veränderbarer Entfernung vor der Mündung der Zweistoffdüse angebracht sein. Die wurmförmigen Gebilde können durch den zwischen der unteren Begrenzung des Strömungsbrechers und dem Boden der Fällwane freibleibenden Spalt zur Austragsöffnung hin durchtreten. Der Abstand zwischen Zweistoffdüse und Strömungsbrecher ist ein weiterer Parameter zur Beeinflussung von Größe und Gestalt der entstehenden wurmförmigen Gebilde.

Die Zweistoffdüse besteht vorzugweise aus einer Hülse mit Innengewinde und einem unter Aussparung eines Ringspaltes in die Hülse einschraubbaren Düsenkörper, welch letzterer eine zentrale Bohrung und einen kegelstumpfförmigen Innenteil aufweist, wobei an der Hülse ein in den Ringspalt mündender Seiteneinlaß und an dem Düsenkörper ein schräg gegen die Achse des Düsenkörpers gerichtete Schlitze aufweisender Kranz vorgesehen sind und wobei das mündungsseitige Ende des Düsenkörpers eine zur Fortsetzung der Achse hin konvergierende und mit einer entsprechenden Abschrägung der Hülse korrespondierende Abschrägung aufweist.

Das unter erhöhtem Druck stehende Fällungsmittel gelangt durch den Seiteneinlaß in den Ringspalt, beim Durchtritt durch die schräggestellten Schlitze des auf dem Düsenkörper vorgesehenen Kranzes wird der Fällungsmittelströmung eine Rotationskomponente aufgeprägt, so daß beim Austritt aus dem Ringspalt ein Drallkegel im Fällbad gebildet wird.

Vorteilhaft sind Rieseltassen als Wascheinrichtungen vorgesehen.

Unterhalb des Siebbandes können zweckmäßig Auffangbehälter für das Wasch- bzw. Extraktionsmittel angeordnet sein, welche durch Überläufe mit dem jeweils vorangehenden Behälter verbunden sind. In den Behältern stellt sich auf diese Weise ein Konzentrationsgradient des in der Waschflüssigkeit enthaltenen organischen Lösungsmittels ein. Jedem Behälter ist eine Rieseltasse zugeordnet, wobei der (den) letzten Rieseltasse(n) der Reihe reines Wasser zugeführt wird. In der Praxis hat sich in vielen Fällen als besonders vorteilhaft erwiesen, das sich im ersten -d.h. dem Aufgabeende des Siebbandes nächsten -Auffangbehälter der Reihe ansammelnde wässerige Lösungsmittel (gleichzeitig Fällungsmittel) mit dem höchsten Gehalt an aprotischem, polarem Lösungsmittel sowohl der ersten Rieseltasse der Reihe als auch der Fällwanne zuzuführen und auch zur Bildung des Drallkegels zu verwenden, nach der beschriebenen Ausführungsform somit vorzugsweise dem Ringspalt einer Zweistoffdüse unter erhöhtem Druck zuzuleiten. Ein weiterer Teilstrom des Fällungsmittels mit dem höchsten Gehalt an organischem Lösungsmittel aus dem ersten Behälter kann kontinuierlich abgezogen und zur Aufarbeitung einer Trennstation -beispielsweise einer Destillations- bzw. Rektifikationsstation - zugeführt werden, um das organische Lösungsmittel rückzugewinnen.

Als Trockner ist nach einer bevorzugten Ausführungsform ein Hochfrequenz-Durchlauftrockner vorgesehen. Ein solcher Trockner bewirkt die gleichmäßige Trocknung der in der vliesartigen Bahn vorliegenden Polymerisat-Gebilde infolge der Tiefenwirkung der HF-Energie im Gegensatz zur Feuchtigkeitsentfernung in

beispielsweise einem Taumeltrockner, wo die Energie über heiße Kontaktflächen zugeführt werden muß. Durch die schlechte Wärmeübertragung der Polymerisate und das angelegte Vakuum kam es daher bisher regelmäßig zu örtlichen Überhitzungen unter Verfärbung der Polymerisatpartikel. Dieser übliche Trocknungsvorgang erforderte lange Zeiträume (z.B. 48 Stunden), wobei es wegen im Trockner vorhandener Toträume vorkommen konnte, daß das Produkt nicht weitestgehend von Wasser und Lösungsmittelresten befreit wurde.

Bei einer weiteren Ausgestaltung der erfindungsgemäßen Anlage sind im Anschluß an den Auslauf des Trockners hintereinander eine Messermühle und eine Feinprallmühle angeordnet.

Die Erfindung wird im folgenden anhand der Zeichnung und der Beispiele noch näher erläutert. Fig. 1 zeigt schematisch eine bevorzugte Ausführungsform einer erfindungsgemäßen Anlage. In Fig. 2 ist gleichfalls schematisch ein Ausschnitt der Anlage nach Fig. 1, nämlich die Fällwanne mit dem Aufgabeende des Siebbandes, dargestellt. Eine erfindungsgemäß einsetzbare Zweistoffdüse ist den Fig. 3 bis 5 zu entnehmen, wobei Fig. 3 einen Schnitt durch die zusammengestellte Düse zeigt, aus Fig. 4 eine Seitenansicht des Düsenkörpers und aus Fig. 5 eine Draufsicht auf den Düsenkörper ersichtlich sind. In Fig. 6 ist die Bildung eines Drallkegels an der Mündung einer Zweistoffdüse nach den Fig. 3 bis 5 veranschaulicht, und Fig. 7 zeigt erfindungsgemäß zunächst gebildete kurze, unregelmäßige, wurmförmige Gebilde aus hochtemperaturbeständigem Polymerisat.

Eine Zweistoffdüse ist in Fig. 1 allgemein mit 1 bezeichnet. An die Zweistoffdüse 1 sind eine zentrale Leitung 2 für die konzentrierte Lösung eines Polymerisates sowie eine seitliche Leitung 3 für heißes, wässeriges Fällungsmittel angeschlossen. Die Zweistoffdüse 1 befindet sich in einer Fällwanne 4 unterhalb des Spiegels eines Fällbades 5. Eine Zuleitung für Fällungsmittel in die Fällwanne 4 ist mit 6 bezeichnet. Die konzentrierte Polymerisatlösung wird über eine nicht dargestellte Pumpe unter hohem Druck durch die Leitung 2 eingespeist. Das heiße wässerige Fällungsmittel wird - gleichfalls unter hohem Druck - durch die Leitung 3 zugeführt. An der Mündung der Zweistoffdüse 1 kommt es zu einer Verfestigung bzw. Ausfällung des austretenden Fadens bzw. Stranges 7 aus konzentrierter Polymerisatlösung und unter Einwirkung des nür mit seinen ungefähren Umrissen angedeuteten Drallkegels 8 entstehen aus dem sich verfestigenden Faden bzw. Strang 7 wurmförmige Gebilde 9 aus Polymerisat, die von der Strömung des Fällungsmittels, welche sich zwischen der Einmündung wenigstens einer Zuleitung 6 und der Austragsöffnung 10 der Fällwanne 4 ausbildet, mitgenommen und ausgeschwemmt werden (Fig. 2).

Vor der Mündung der Zweistoffdüse 1 ist ein nicht bis zum Boden der Fällwanne 4 reichender Strömungsbrecher 11 verstellbar montiert, so daß der Abstand zwischen der Zweistoffdüse 1 und dem Strömungsbrecher 11 geändert werden kann.

Die Gebilde 9 gelangen unmittelbar auf das unter der Austragsöffnung 10 befindliche Aufgabeende eines beweglichen Siebbandes 12. Das endlose Siebband 12 ist auf Stützwalzen 13a, 13b jeweils an dessen Auf- und Abgabeende gelagert. Je nach Länge des sich in Richtung des Pfeiles 14 bewegenden Siebbandes 12 können noch weitere Stützrollen zwischen den beiden eingezeichneten angeordnet sein. Zum Spannen, zum Antrieb sowie zur Führung des Siebbandes 12 können weitere Walzen vorgesehen sein, von denen zwei mit 15a und 15b bezeichnet sind.

Auf dem Siebband 12 vereinigen sich die Polymerisat-Gebilde 9 zu einer relativ gleichmäßigen vliesartigen Bahn 16, welche infolge des durch grobe Verhakungen zusammengehaltenen Netzwerkes aus Gebilden 9 sehr gut auswaschbar bzw. extrahierbar ist.

Auch die in der Bahn 16 zuunterst liegenden Gebilde 9 werden einwandfrei extrahiert. Die vliesartige Bahn 16 weist trotzdem einen vollkommen ausreichenden Zusammenhalt auf, um den störungsfreien Transport durch die erfindungsgemäße Anlage zu gewährleisten, so daß durchwegs die vorgesehene, definierte Verweilzeit eingehalten werden kann.

Oberhalb der auf dem Siebband 12 transportierten Bahn 16 sind Rieseltassen angeordnet, von denen lediglich drei (17a, 17b, 17c) dargestellt sind. Diese Rieseltassen legen bei der gezeigten Ausführungsform die einzelnen Wasch- bzw. Extraktionszonen fest, wobei der letzten Rieseltasse 17c oder bei einer größeren Anzahl von Waschzonen den letzten Rieseltassen reines Wasser zugeführt wird, um das aprotische, polare Lösungsmittel praktisch vollständig aus den wurmförmigen Gebilden 9 zu entfernen. Wie bereits weiter vorne ausgeführt wurde, ist es in vielen Fällen zweckmäßig, in der ersten oder in den ersten Waschzonen mit einer Flüssigkeit von annähernd gleicher Zusammensetzung wie das wässerige Fällungsmittel im Fällbad 5 zu extrahieren und einen Konzentrationsgradienten von der ersten zur letzten Waschzone im Sinne einer Gegenstromextraktion einzustellen. Unterhalb des Siebbandes 12 kann eine nicht dargestellte Auffangwanne mit Unterteilungen oder eine Mehrzahl von Auffanggefäßen für die Waschflüssigkeiten vorgesehen sein.

Am Abgabeende des Siebbandes 12 ist eine beweglich gelagerte Andruckwalze 18 aus elastischem Material vorgesehen, welche mit der Stützwalze 13b zusammenwirkt. Beim Durchtritt der vliesartigen Bahn

16 durch den Walzenspalt wird überschüssige Oberflächenfeuchte abgequetscht und die Bahn 16 wird mittels einer Leiteinrichtung 19 auf das Förderband 20 eines Hochfrequenz-Durchlauftrockners 21 übergeführt. Im Bereich der Einlauföffnung des HF-Durchlauftrockners 21 kann die noch vorhandene Oberflächenfeuchte der die Bahn 16 aufbauenden Gebilde 9 durch Absaugen entlang einer bestimmten Absaugstrecke nochmals reduziert werden, bevor die Bahn 16 in den Raum zwischen die Hochfrequenzelektroden 22a und 22b eintritt. Eine Stromzuleitung 23 zur Hochfrequenzelektrode 22a ist durch die obere Gehäusewand des HF-Durchlauftrockners 21 geführt.

Die Moleküle des Restwassers werden während der kurzen Verweilzeit durch die HF-Energie angeregt, und das Wasser geht in die Dampfphase über. Der Wasserdampf wird über den Absaugstutzen 24 aus dem HF-Durchlauftrockner entfernt. Die Bahn 16 bzw. die Polymerisat-Gebilde 9 selbst erfahren keine Erwärmung, so daß es weder zu einer thermischen noch zu einer hydrolytischen Schädigung des Polymerisates kommen kann.

Vom Auslauf des HF-Durchlauftrockners 21 gelangt die vliesartige Bahn 16 in eine Messermühle 25, welche als Vorzerkleinerer dient. Das vorzerkleinerte Gut wird durch eine Leitung 26 einer Feinprallmühle 27 zugeführt, in welcher die Feinmahlung stattfindet. Das resultierende, pulverförmige hochtemperaturbeständige Polymerisat fällt durch einen Pulvertrichter 28 in einen Vorratsbehälter 29.

Die in Fig. 1 und 2 lediglich schematisierte spezielle Zweistoffdüse 1 besteht gemäß den Fig. 3 bis 5 aus einer Hülse 30 mit Innengewinde sowie aus einem in die Hülse 30 einschraubbaren, eine zentrale Bohrung 31 aufweisenden Düsenkörper 32, welcher bei der dargestellten Ausführungsform gleichfalls mit einem Innengewinde für den Anschluß der zentralen Leitung 2 ausgestattet ist. Zur vollständigen Abdichtung der Schraubverbindung von Hülse 30 mit Düsenkörper 32 ist ein Dichtring 33 vorgesehen.

Zwischen der Hülse 30 und dem einen kegelstumpfförmigen Innenteil 34 aufweisenden Düsenkörper 32 bleibt nach vollständigem Einschrauben des Düsenkörpers 32 ein Ringspalt 35 ausgespart, in welch letzteren ein an der Hülse 30 vorgesehener Seiteneinlaß 36 mündet. Der Seiteneinlaß 36 ist mit einem Außengewinde zum Anschluß der Leitung 3 versehen. Auf den Düsenkörper 32 ist im Bereich des Ringspaltes 35 weiters ein Kranz 37 mit im wesentlichen kreisringförmigem Querschnitt vorgesehen, dessen äußerer Durchmesser nur geringfügig kleiner ist als der Innendurchmesser der Hülse 30. Der Kranz 37 weist schräg gegen die Achse des Düsenkörpers 32 gerichtete Schlitze 38 auf (Fig. 4 und 5). Das mündungsseitige Ende des Düsenkörpers 32 weist eine Abschrägung 39 auf, welche zur Fortsetzung der Achse des Düsenkörpers 32 außerhalb der Zweistoffdüse 1 hin konvergiert. Die Hülse 30 ist mit einer korrespondierenden Abschrägung 40 versehen, so daß im zusammengestellten Zustand der Zweistoffdüse 1 zwischen den Abschrägungen 39 und 40 ein enger Spalt freibleibt, durch den heißes, wässeriges Fällungsmittel austreten kann.

Das austretende Fällungsmittel bildet den mit seinen ungefähren Umrissen in Fig. 6 angedeuteten Drallkegel 8 aus, wodurch das Fällbad 5 vor der Mündung der Zweistoffdüse 1 in Rotation versetzt wird. Das entstehende Strömungsbild ist in groben Zügen durch die geraden Pfeile veranschaulicht.

Die aus der zentralen Bohrung 31 des Düsenkörpers 32 in Form eines sich verfestigenden Fadens bzw. Stranges 7 ausgepreßte konzentrierte Lösung des Polymerisates wird im Bereich des Drallkegels von der Strömung erfaßt und gleichfalls in Drehung versetzt (gekrümmte Pfeile 41), wodurch der Faden bzw. Strang 7 an der Düsenmündung zu kurzen, unregelmäßigen wurmförmigen Gebilden 9 abgedreht wird. Gestalt und Länge der Gebilde 9 werden vor allem von der Höhe des Druckes, unter dem das heiße, wässerige Fällungsmittel durch die seitliche Leitung 3 der Zweistoffdüse 1 zugeführt wird, sowie von der Entfernung des Strömungsbrechers 11 von der Mündung der Zweistoffdüse 1 (Fig. 1 und 2) bestimmt. Je höher der Druck ist, desto stärker wird der Drall bzw. die Rotation und desto kürzer werden die Gebilde 9. Im gleichen Sinn wirkt eine Annäherung des Strömungsbrechers 11 an die Düsenmündung infolge der dadurch bewirkten Verkürzung des Drallkegels. Somit können jeweils die geeigneten Verfahrensparameter für Polymerisatlösungen unterschiedlicher Viskosität gewählt werden und das Verhältnis Länge zu Durchmesser der Gebilde 9 kann annähernd konstant gehalten werden.

Die Extraktionswirkung des wässerigen Fällungsmittels ist bei geringerem Durchmesser der Gebilde 9 besser. Die Festigkeit (das Zusammenhaltevermögen) der vliesartigen Bahn 16 hängt von der Länge und dem Krümmungsgrad der Gebilde 9 ab (siehe Fig. 7).

Eine zu hohe Konzentration des aprotischen, polaren Lösungsmittels im Fällbad 5 sowie im drallkegelerzeugenden heißen wässerigen Fällungsmittel ist nicht günstig, da die Verfestigung der ausgepreßten Polymerisatlösung zu langsam voranschreiten würde. Andererseits hat sich auch reines Wasser für diesen Zweck nicht als besonders geeignet erwiesen, da die Verhornung der Oberfläche des gebildeten Fadens bzw. Stranges 7 zu rasch stattfindet, wodurch die vollständige Extraktion des aprotischen, polaren Lösungsmittels aus dem Inneren der Gebilde 9 gehemmt wird.

In den nachstehenden Beispielen 1 bis 4 wird jeweils eine Lösung eines hochtemperaturbeständigen Mischpolyimides mit sich wiederholenden Struktureinheiten der Formel (I) eingesetzt, worin R zu etwa 80 Mol% für 2,4- und/oder 2,6-Toluylen und zu etwa 20 Mol% für eine Gruppe der Formel

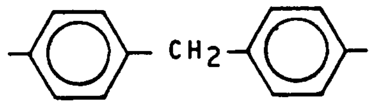

steht.

Die Herstellung der Pulver erfolgte in einer Anlage gemäß den Fig. 1 bis 5.

Beispiel 1:

Es wurde eine Lösung mit 25 Massen% an Mischpolyimid und mit einer Viskosität von 138 Kugelfallsekunden (Kugelfall: Kugeldurchmesser 2,1 mm, Meßtemperatur 70 °C, 3 h Vortemperierzeit, Rohrdurchmesser 30 mm, Kugelmaterial Lagerstahl, Meßlänge 100 mm) in Dimethylformamid (DMF) hergestellt, welche mit einer Temperatur von 45 °C unter einem Druck von etwa 40 bar durch die zentrale Bohrung 31 einer Zweistoffdüse 1 in ein Fällbad 5 ausgepreßt wurde. Das wässerige Fällungsmittel wurde der Zweistoffdüse 1 mit einer Temperatur von 80 °C unter einem Druck von 27 bar zugeführt. Das wässerige Fällungsmittel wies - ebenso wie das Fällbad 5 - eine Konzentration von 48 % DMF auf.

Die entstandene vliesartige Bahn 16 wurde durch sieben aufeinanderfolgende Wasch- bzw. Extraktionszonen geführt, wobei in der ersten Zone eine wässerige Waschflüssigkeit mit 48 % DMF, in der zweiten eine solche mit 20,5 % DMF, in der dritten eine Waschflüssigkeit mit 11,5 % DMF, in der vierten Zone eine Waschflüssigkeit mit 0,2 % DMF und in der fünften bis siebenten Zone reines Wasser verwendet wurde. Die Temperatur der Waschflüssigkeit und des Wassers betrug jeweils 80 °C.

Die Bahn 16 wurde unter Anwendung eines Druckes von 4 bar abgequetscht.

Die Leistung des HF-Durchlauftrockners betrug 8,3 kW, die Elektrodenspannung 100 kV.

Die wurmförmigen Gebilde 9 wiesen eine Länge von 3 bis 8 cm und einen mittleren Durchmesser von etwa 3 bis 4 mm auf.

Als Vorschneidmühle wurde eine Messermühle mit Lochblecheinsatz (Durchmesser der Öffnungen: 3 mm) verwendet.

Das vorzerkleinerte Material wurde mittels einer Feinprallmühle weiter zerkleinert.

Eigenschaften des erhaltenen Polymerisat-Pulvers:

| | |
|---|---|
| Feinheit: | kleiner 0,075 mm |
| DMF-Gehalt: | 0,07 % |
| $H_2O$-Gehalt: | 1,34 % |

inhärente Viskosität ($eta_{inh\ NMP}$), gemessen bei einer Konzentration von 0,5 g/dl in N-Methylpyrrolidon: 0,63 dl/g.

Die inhärente Viskosität ist proportional der Kettenlänge des gelösten linearen Polymerisates und somit auch proportional dem Molekulargewicht.

An herkömmlich hergestellten Mischpolyimidpulvern dieser Art konnten $eta_{inh\ NMP}$-Werte von lediglich etwa 0,40 bis etwa 0,47 dl/g gemessen werden, was auf Schädigungen der Polymerisatstruktur bei bekannten Produkten schließen läßt.

Beispiel 2:

Es wurde gemäß Beispiel 1 vorgegangen, folgende Parameter wurden geändert:

Lösung: 30 Massen% Mischpolyimid, Viskosität: 93
Kugelfallsekunden, Temperatur: 25 °C

Wässeriges Fällungsmittel: Druck 19 bar, 25 % DMF

Waschzonen:

| | |
|---|---|
| Zone 1: | 25 % DMF |
| Zone 2: | 24 % DMF |
| Zone 3: | 0,2 % DMF |
| Zonen 4 bis 7: | $H_2O$ |

Dimensionen der Gebilde 9: Länge: 3 bis 5 cm,

Durchmesser: 2 bis 3 mm
HF-Durchlauftrockner: Leistung: 5,2 kW
Elektrodenspannung: 70 kV
Eigenschaften des erhaltenen Polymerisat-Pulvers:

| | |
|---|---|
| Feinheit: | 0,15 bis 0,425 mm |
| DMF-Gehalt: | nicht vorhanden |
| $H_2O$-Gehalt: | 1,5 % |
| $eta_{inh\ NMP}$: | 0,60 dl/g |

Beispiel 3:

Es wurde die gleiche konzentrierte Polymerisat-Lösung wie in Beispiel 2 eingesetzt, im übrigen wurde analog, wie in Beispiel 1 beschrieben, gearbeitet, jedoch mit dem Unterschied, daß sowohl zur Herstellung als auch zur Extraktion der Gebilde 9 in den Waschzonen reines Wasser einer Temperatur von 70 °C verwendet wurde, welches der Zweistoffdüse 1 unter einem Druck von 30 bar zugeführt wurde.

Die Länge der erhaltenen wurmförmigen Gebilde 9 bewegte sich zwischen 3 und 8 cm, der Durchmesser betrug 3 bis 5 mm. Im HF-Durchlauftrockner wurde bei einer Elektrodenspannung von 55 kV eine Leistung von 5,2 kW aufgenommen.

Eigenschaften des erhaltenen Polymerisat-Pulvers:

| | |
|---|---|
| Feinheit: | kleiner 0,075 mm |
| DMF-Gehalt: | 0,02 % |
| $H_2O$-Gehalt: | 1,2 % |
| $eta_{inh\ NMP}$: | 0,55 dl/g |

Beispiel 4:

Als konzentrierte Lösung des Polymerisates wurde wieder die in Beispiel 2 spezifizierte Lösung mit einer Temperatur von 25 °C eingesetzt. Abweichend von der in Beispiel 1 beschriebenen Vorgangsweise wurden folgende Bedingungen gewählt:
Wässeriges Fällungsmittel: Druck 34 bar, 56 % DMF
Waschzonen:

| | |
|---|---|
| Zone 1: | 56 % DMF |
| Zone 2: | 13 % DMF |
| Zone 3: | 1,6 % DMF |
| Zone 4: | 0,8 % DMF |
| Zonen 5 bis 7: | $H_2O$ |

Dimensionen der Gebilde 9: Länge: 3 bis 7 cm
Durchmesser: 2 bis 4 mm
HF-Durchlauftrockner: Leistung: 9,8 kW
Elektrodenspannung: 60 kV
Eigenschaften des erhaltenen Polymerisat-Pulvers:

| | |
|---|---|
| Feinheit: | 0,15 bis 0,425 mm |
| DMF-Gehalt: | nicht vorhanden |
| $H_2O$-Gehalt: | 2,1 % |
| $eta_{inh\ NMP}$: | 0,70 dl/g |

Beispiel 5:

Es wurde eine Lösung mit einer Konzentration von 35,9 Massen% an einem Polyätherimid folgender Konstitution:

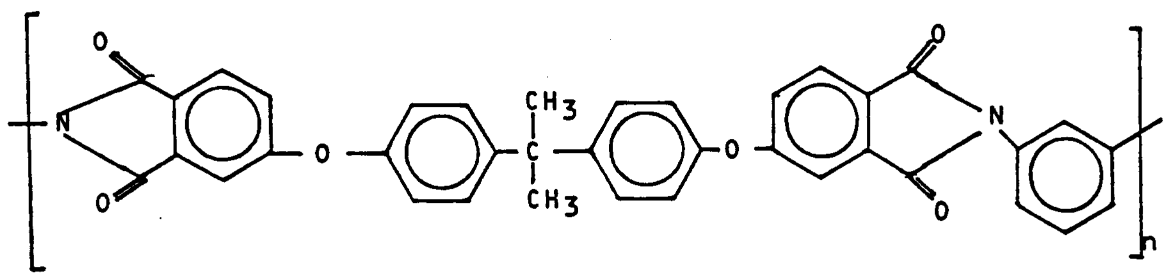

in DMF hergestellt, welche Lösung eine Viskosität von 48,9 Kugelfallsekunden aufwies. Diese Lösung wurde mit einer Temperatur von 25 °C durch die zentrale Bohrung 31 einer Zweistoffdüse 1 unter einem Druck von etwa 40 bar in ein Fällbad 5 ausgepreßt. Das wässerige Fällungsmittel (31 % DMF in Wasser) wurde der Zweistoffdüse 1 mit einer Temperatur von 80 °C unter einem Druck von 18 bar zugeführt.

Wasch-(Extraktions-)zonen:

| | |
|---|---|
| Zone 1: | 31 % DMF in $H_2O$ |
| Zone 2: | 16 % DMF in $H_2O$ |
| Zone 3: | 7 % DMF in $H_2O$ |
| Zone 4: | 2 % DMF in $H_2O$ |
| Zonen 5 bis 7: | $H_2O$ |

Die Temperatur der Waschflüssigkeit und des Wassers betrug jeweils 80 °C.

Abquetschdruck der Walzen 13b, 18 am Abgabeende des Siebbandes 12: 4 bar

Dimensionen der wurmförmigen Gebilde 9:

Länge: 20 bis 25 mm

mittlerer Durchmesser: 3 bis 5 mm

HF-Trocknung: Leistung: 9 kW

Elektrodenspannung: 8 kV

Mahlung: zweistufig in Vorschneidmühle und Feinprallmühle

Eigenschaften des erhaltenen Polymerisat-Pulvers:

| | |
|---|---|
| Feinheit: | 0,15 bis 0,425 mm |
| DMF-Gehalt: | 0,4 % |
| Wassergehalt: | 2,1 % |
| $eta_{inh\ NMP}$: | 53,52 dl/g (gemessen analog Beispiel 1) |

Die erfindungsgemäß hergestellten hochtemperaturbeständigen Polymerisate in Pulverform weisen zum Unterschied von bekannten Produkten einheitliches, verfärbungsfreies Aussehen auf und sind praktisch lösungsmittelfrei.

Die Schüttdichte der erfindungsgemäß erhältlichen Pulver aus annähernd sphärischen Partikeln liegt zwischen 0,5 und 0,6 g/cm$^3$, wohingegen aus Fibriden hergestelltes Polyimidpulver mit faseriger Struktur eine Schüttdichte von nur 0,3 bis 0,35 g/cm$^3$ aufweist.

Herstellung und Eigenschaften von Preßkörpern aus erfindungsgemäß erhältlichen Polymerisatpulvern:

A) Zugfestigkeit, Bruchdehnung:

Herstellung der Probekörper:

In ein Zugprüfstab-Werkzeug, das auf 250 °C vorgewärmt ist, werden 6 g vorgetrocknetes Polyimidpulver der im Zusammenhang mit den Beispielen 1 bis 4 definierten Zusammensetzung eingefüllt, eingestrichen, das Werkzeug wird geschlossen und ein leichter Druck aufgebracht. Die Temperatur wird nahe an 350 °C herangeführt, der Druck kurz weggenommen, um zu entlüften, und daraufhin wird ein Druck von 350 000 N/mm$^2$ aufgebracht. Dieser Druck wird bei einer Temperatur von 350 °C 10 min lang aufrechterhalten. Anschließend wird unter Druck auf etwa 250 °C abgekühlt und entformt. Prüfnorm: ASTM D638-72

| Prüfstab | Dichte ($g/cm^3$) | Zugfestigkeit ($N/mm^2$) | Dehnung (%) |
|---|---|---|---|
| 1 | 1,34 | 128 | 4,7 |
| 2 | 1,34 | 124 | 4,6 |
| 3 | 1,34 | 120 | 4,5 |

B) Druckfestigkeit, Bruchstauchung:
Herstellung der Probekörper:
Proben werden aus vollem Material spanend herausgearbeitet. Prüfnorm: ASTM D695-69

| Prüfkörper | Druckfestigkeit ($N/mm^2$) | Bruchstauchung (%) |
|---|---|---|
| 1 | 446 | 31,4 |
| 2 | 389 | 29,0 |
| 3 | 410 | 30,6 |

E-Modul (gemittelt): 4140 $N/mm^2$
C) Formbeständigkeit in der Wärme:
Herstellung der Probekörper:
Die Prüfstäbe (120 x 15 x 3,5 mm) wurden in einer entsprechenden Form analog zu dem unter A) beschriebenen Drucksinterverfahren hergestellt. Prüfnorm: ISO/R 75, Prüfverfahren A (1,85 $N/mm^2$)

| Probekörper | Formbeständigkeit in der Wärme (°C) |
|---|---|
| 1 | 288 |
| 2 | 281 |

## Patentansprüche

1. Verfahren zur Herstellung von hochtemperaturbeständigen Polymerisaten in Pulverform, wobei eine konzentrierte Lösung des Polymerisates, insbesondere eines Polyimides, in einem aprotischen, polaren Lösungsmittel, wie Dimethylformamid, Dimethylacetamid, Dimethylsulfoxid oder N-Methylpyrrolidon, kontinuierlich in den Bereich eines Drallkegels aus heißem, wässerigem Fällungsmittel ausgepreßt wird, wobei kurze, unregelmäßige, wurmförmige Gebilde (9) entstehen, welche zu einer vliesartigen Bahn (16) vereinigt, mit wässerigen Lösungsmitteln und zuletzt mit Wasser gewaschen, getrocknet und zerkleinert werden.

2. Verfahren nach Anspruch 1, dadurch gekennzeichnet, daß die konzentrierte Lösung des Polymerisates durch die zentrale Bohrung (31) einer Zweistoffdüse (1) in ein Bad aus wässerigem Fällungsmittel ausgepreßt und heißes wässeriges Fällungsmittel unter Druck dem peripheren Kanal der Zweistoffdüse (1) zugeführt wird, wobei dem Fällungsmittel beim Durchströmen des peripheren Kanals ein Drall verliehen wird, worauf das Fällungsmittel zur Achse der zentralen Bohrung (31) hin kohvergierend in das Bad austritt.

3. Verfahren nach Anspruch 2, dadurch gekennzeichnet, daß das wässerige Fällungsmittel dem peripheren Kanal mit einer Temperatur von 20 bis 95 °C und unter einem Druck von 10 bis 100 bar zugeführt

wird.

**4.** Verfahren nach mindestens einem der Ansprüche 1 bis 3, dadurch gekennzeichnet, daß die Lösung eines Mischpolyimides mit Strukturenheiten der allgemeinen Formel

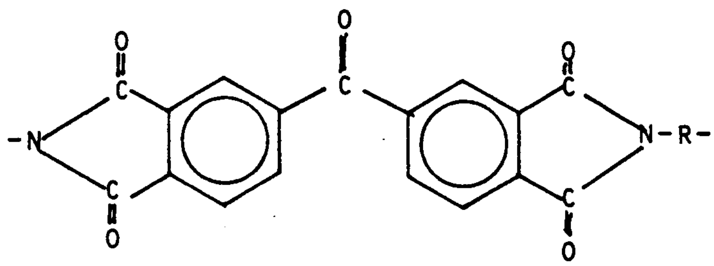

, (I)

worin R für 2,4- und/oder 2,6-Toluylen oder für eine Gruppe der Formel

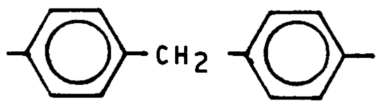

steht, eingesetzt wird.

**5.** Verfahren nach mindestens einem der Ansprüche 1 bis 4, dadurch gekennzeichnet, daß eine Lösung mit 20 bis 30 Massen% Polymerisat in Dimethylformamid eingesetzt wird.

**6.** Verfahren nach mindestens einem der Ansprüche 1 bis 5, dadurch gekennzeichnet, daß als Fällungsmittel Wasser oder ein Gemisch von Wasser und Dimethylformamid verwendet wird.

**7.** Verfahren nach mindestens einem der Ansprüche 1 bis 6, dadurch gekennzeichnet, daß die vliesartige Bahn (16) auf einem Siebband (12) aus elastischem Material durch Waschzonen geführt wird, worauf die Bahn (16) zwischen Walzen (13b, 18) abgepreßt wird und vor der eigentlichen Trocknung eine Absaugstrecke durchläuft.

**8.** Verfahren nach mindestens einem der Ansprüche 1 bis 7, dadurch gekennzeichnet, daß die Trocknung in einem Hochfrequenz(HF-)trockner (21) durchgeführt wird.

**9.** Verfahren nach mindestens einem der Ansprüche 1 bis 8, dadurch gekennzeichnet, daß die Zerkleinerung zweistufig mittels einer Messermühle (25) und einer Feinprallmühle (27) durchgeführt wird.

**10.** Anlage zur Durchführung des Verfahrens nach wenigstens einem der Ansprüche 1 bis 9, bei der eine Zweistoffdüse (1) mit Zuleitungen (2, 3) für eine konzentrierte Lösung eines Polymerisates und für wässeriges Fällungsmittel vorgesehen ist, welche Zweistoffdüse (1) mit einer Düsenöffnung für die Lösung des Polymerisates und einer Düsenöffnung für das Fällungsmittel in eine mit wenigstens einer Zuleitung (6) für Fällungsmittel versehene Fällwanne (4) ausmündet, wobei die Düsenöffnung für das Fällungsmittel die Düsenöffnung für die Lösung des Polymerisates ringförmig umgibt und sich der Durchmesser des ringförmigen Düsenkanals in Strömungsrichtung konisch verjüngt, wobei weiters unter der Austragsöffnung (10) der Fällwanne (4) das Aufgabeende eines beweglichen Siebbandes (12)angeordnet ist, über dem sich Wascheinrichtungen befinden, und wobei das Abgabeende des Siebbandes (12) vor dem Einlauf eines Trockners angeordnet ist, dadurch gekennzeichnet, daß sich die Wascheinrichtungen oberhalb des Siebbandes (12) im wesentlichen über dessen gesamte Länge erstrecken, daß im Anschluß an den Auslauf des Trockners eine ein- oder mehrstufige Zerkleinerungseinrichtung vorgesehen ist und daß vor der Düsenöffnung für das Fällungsmittel ein Dralleinsatz vorgesehen ist.

11. Anlage nach Anspruch 10, dadurch gekennzeichnet, daß vor der Mündung der Zweistoffdüse (1) ein nicht bis zum Boden der Fällwanne (4) reichender Strömungsbrecher (11) angeordnet ist.

12. Anlage nach wenigstens einem der Ansprüche 10 und 11, dadurch gekennzeichnet, daß die Zweistoffdüse (1) aus einer Hülse (30) mit Innengewinde und einem unter Aussparung eines Ringspaltes (35) in die Hülse (30) einschraubbaren Düsenkörper (32) besteht, welch letzterer eine zentrale Bohrung (31) und einen kegelstumpfförmigen Innenteil (34) aufweist, wobei an der Hülse (30) ein in den Ringspalt (35) mündender Seiteneinlaß (36) und an dem Düsenkörper (32) ein schräg gegen die Achse des Düsenkörpers (32) gerichtete Schlitze (38) aufweisender Kranz (37) vorgesehen sind und wobei das mündungsseitige Ende des Düsenkörpers (32) eine zur Fortsetzung der Achse hin konvergierende und mit einer entsprechenden Abschrägung (40) der Hülse (30) korrespondierende Abschrägung (39) aufweist.

13. Anlage nach wenigstens einem der Ansprüche 10 bis 12, dadurch gekennzeichnet, daß als Wascheinrichtungen Rieseltassen (17a, 17b, 17c) vorgesehen sind.

14. Anlage nach wenigstens einem der Ansprüche 10 bis 13, dadurch gekennzeichnet, daß als Trockner ein Hochfrequenz-Durchlauftrockner (21) vorgesehen ist.

15. Anlage nach wenigstens einem der Ansprüche 10 bis 14, dadurch gekennzeichnet, daß im Anschluß an den Auslauf des Trockners hintereinander eine Messermühle (25) und eine Feinprallmühle (27) angeordnet sind.

**Claims**

1. A method for the production of polymerides in powder form, which are resistant to high temperatures, in which a concentrated solution of the polymeride, in particular of a polyimide, in an aprotic, polar solvent, such as dimethylformamide, dimethylacetamide, dimethylsulphoxide or N-methylpyrrolidon, is expressed continuously into the region of a twisting cone of hot, aqueous precipitant, in which short, irregular, worm-shaped structures (9) are produced, which are combined into a fleece-like web (16), are washed with aqueous solvents and are finally washed with water, dried and comminuted.

2. A method according to Claim 1, characterised in that the concentrated solution of the polymeride is expressed through the central bore (31) of a binary nozzle (1) into a bath of aqueous precipitant, and hot aqueous precipitant is supplied under pressure to the peripheral conduit of the binary nozzle (1), in which a twist is given to the precipitant on flowing through the peripheral conduit, whereupon the precipitant emerges into the bath, converging towards the axis of the central bore (3).

3. A method according to Claim 2, characterised in that the aqueous precipitant is supplied to the peripheral conduit at a temperature of 20° to 95°C and at a pressure of 10 to 100 bar.

4. A method according to at least one of Claims 1 to 3, characterised in that the solution of a mixed polyimide with structural units of the general formula

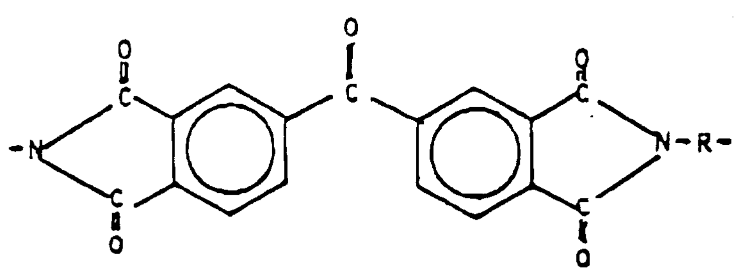 , (I)

in which R stands for 2,4- and/or 2,6-toluylene or for a group of the formula

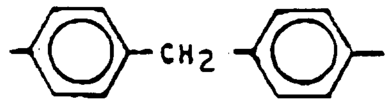

is used.

**5.** A method according to at least one of Claims 1 to 4, characterised in that a solution is used with 20 to 30% by mass polymeride in dimethylformamide.

**6.** A method according to at least one of Claims 1 to 5, characterised in that as precipitant, water or a mixture of water and dimethylformamide is used.

**7.** A method according to at least one of Claims 1 to 6, characterised in that the fleece-like web (16) is guided through washing zones on a screen belt (12) of elastic material, after which the web (16) is squeezed between rollers (13b, 18) and runs through a suction section before the actual drying.

**8.** A method according to at least one of Claims 1 to 7, characterised in that the drying is carried out in a high-frequency (HF) drier (21).

**9.** A method according to at least one of Claims 1 to 8, characterised in that the comminution is carried out in two stages by means of a cutter mill (25) and a fine impact pulverizer (27).

**10.** An installation to carry out the method according to at least one of Claims 1 to 9, in which a binary nozzle (1) is provided with feed lines (2, 3) for a concentrated solution of a polymeride and for aqueous precipitant, which binary nozzle (1) opens out with a nozzle opening for the solution of the polymeride and with a nozzle opening for the precipitant into a precipitation tank (4) provided with at least one feed line (6) for precipitant, in which the nozzle opening for the precipitant surrounds the nozzle opening for the solution of the polymeride in an annular manner and the diameter of the annular nozzle conduit narrows conically in the direction of flow, in which additionally, beneath the discharge opening (10) of the precipitation tank (4), the delivery end of a movable screen belt (12) is arranged, over which washing devices are situated, and in which the delivery end of the screen belt (12) is arranged in front of the inlet of a drier, characterised in that the washing devices extend above the screen belt (12) substantially over its entire length, that joining on to the outlet of the drier, a single- or multiple-stage comminution device is provided, and that in front of the nozzle opening for the precipitant, a swirl vane is provided.

**11.** An installation according to Claim 10, characterised in that in front of the opening of the binary nozzle-(1) a flow breaker (11) is arranged which does not reach as far as the base of the precipitation tank (4).

**12.** An installation according to at least one of Claims 10 and 11, characterised in that the binary nozzle (1) consists of a sleeve (30) with internal thread and of a nozzle body (32) which is able to be screwed into the sleeve (30) with recessing of an annular slot (35), which nozzle body has a central bore (31) and an inner part (34) in the shape of a truncated cone, in which there is provided on the sleeve (30) a lateral inlet (36) opening into the annular slot (35) and on the nozzle body (32) a ring (37) having slits (38) directed obliquely towards the axis of the nozzle body (32), and in which the end of the nozzle body (32) on the opening side has a chamfer (39) converging towards the extension of the axis and in conformity with a corresponding chamfer (40) of the sleeve (30).

**13.** An installation according to at least one of Claims 10 to 12, characterised in that as washing devices sprinkler cups (17a, 17b, 17c) are provided.

**14.** An installation according to at least one of Claims 10 to 13, characterised in that as drier a high-frequency through-run drier (21) is provided.

**15.** An installation according to at least one of Claims 10 to 14, characterised in that joining on to the outlet of the drier, a cutter mill (25) and a fine impact pulverizer (27) are arranged one behind the other.

## Revendications

1. Procédé de préparation de polymérisat en poudre résistant à haute température par lequel on expulse sous pression une solution concentrée du polymérisat, notamment d'un polyimide dissous dans un solvant aprotique polaire tel que diméthylformamide, diméthyl acétamide, diméthylsulfoxyde ou N-méthylpyrrolidone, en continu dans un tourbillon d'agent de précipitation aqueux chaud, formant ainsi des corps vermiculés (9) courts et irréguliers qui sont rassemblés en une nappe (16) ressemblant à une toison, sont lavés à l'aide d'un solvant aqueux et finalement à l'eau puis sont séchés et broyés.

2. Procédé selon la revendication 1, caractérisé en ce que la solution concentrée du polymérisat est expulsée par l'alésage central (31) d'une buse (1) pour deux substances dans un bain de précipitation aqueux et que de l'agent de précipitation aqueux chaud est amené sous pression dans le canal périphérique de la buse (1) pour deux substances, l'agent de précipitation se voyant imposer par son écoulement à travers le canal périphérique un mouvement tourbillonnant qui, dans le bain, le fait sortir en convergeant vers l'axe de l'alésage central (31).

3. Procédé selon la revendication 2, caractérisé en ce que l'agent de précipitation aqueux est amené au canal périphérique à une température de 20 à 95°C et sous une pression de 10 à 100 bars.

4. Procédé selon au moins l'une des revendications 1 à 3 caractérisé en ce que l'on emploie la solution d'un polyimide mixte renfermant des motifs structuraux de formule générale:

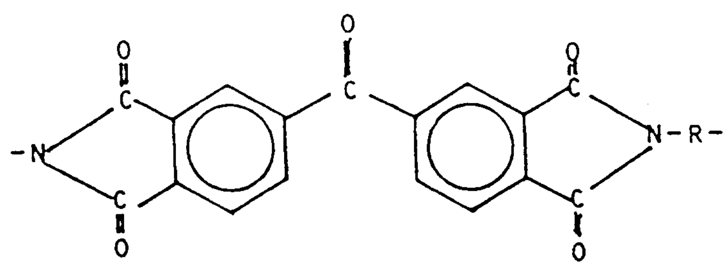

(I)

dans laquelle R signifie le groupe 2,4 et/ou 2,6-toluylène ou un groupe de formule

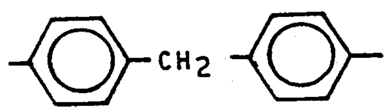

5. Procédé selon au moins l'une des revendications 1 à 4, caractérisé en ce que l'on emploie une solution renfermant 20 à 30% en masse de polymérisat dans du diméthylformamide.

6. Procédé selon au moins l'une des revendications 1 à 5, caractérisé en ce que l'on utilise comme agent de précipitation de l'eau ou un mélange d'eau et de diméthylformamide.

7. Procédé selon au moins l'une des revendications 1 à 6, caractérisé en ce que la nappe (16) ressemblant à une toison est acheminée sur une bande perforée (12) en matériau élastique à travers des zones de lavage, la nappe (16) étant essorée entre des cylindres (13b, 18) et passant, avant le séchage proprement dit, à travers un parcours d'aspiration.

8. Procédé selon au moins l'une des revendications 1 à 7, caractérisé en ce que le séchage est effectué dans un sécheur (21) (-HF) à haute fréquence.

9. Procédé selon au moins l'une des revendications 1 à 8, caractérisé en ce que le broyage est exécuté en deux étapes au moyen d'un broyeur à couteaux (25) et d'un broyeur fin à tourbillonnement (27).

**10.** Installation de mise en oeuvre du procédé selon au moins l'une des revendications 1 à 9 dans laquelle se trouve une buse à deux substances (1) comportant deux conduits d'accès (2, 3) pour une solution concentrée d'un polymérisat et pour un agent de précipitation aqueux, cette buse à deux substances (1) comportant un ajutage pour la solution de polymérisat et un ajutage pour l'agent de précipitation et débouchant dans un bain (4) de précipitation pourvu d'au moins une arrivée (6) d'agent de précipitation, l'ajutage de l'agent de précipitation occupant une disposition circulaire autour de l'ajutage de la solution de polymérisat, le diamètre du canal circulaire de l'ajutage se rétrécissant en cône dans le sens de l'écoulement, et en outre, étant en dessous de l'orifice de sortie (10) du bain de précipitation (4), disposé à l'extrémité réceptrice d'une bande perforée mobile (12) au-dessus de laquelle se trouvent les installations de lavage, et l'extrémité débitrice de la bande perforée (12) étant disposée avant l'entrée d'un sécheur, caractérisé en ce que les dispositifs de lavage s'étendant, au-dessus de la bande perforée (12) sensiblement suivant toute sa longueur, que, juste après la sortie du sècheur, se trouve un dispositif de broyage en une ou plusieurs étapes et que, avant l'ajutage de précipitation, se trouve un dispositif de tourbillonement.

**11.** Dispositif selon la revendication 10, caractérisé en ce que, devant la sortie de la buse (1) à deux substances, est installé un brise-courant (11) qui ne descend pas jusqu'au fond du bain de précipitation (4).

**12.** Installation selon au moins l'une des revendications 10 et 11, caractérisée en ce que la buse à deux substances (1) est constituée d'une douille (30) filetée intérieurement et d'un corps d'ajutage (32) pouvant être vissé dans la douille (30) en ménageant un espace annulaire (35), cet ajutage (32) comportant un alésage central (31) et une zone intérieure (34) de forme tronconique, une arrivée latérale (36) étant raccordée à la douille (30) et débouchant dans l'espace annulaire (35) et l'ajutage (34) étant entouré d'une couronne (37) comportant des fentes (38) orientées en biais par rapport à l'axe de l'ajutage (32), l'extrémité de l'ajutage (32) se trouvant à l'embouchure comportant un épaulement incliné (39) convergeant dans le prolongement de l'axe et correspondant avec un épaulement incliné (40) de forme analogue usiné dans la douille (30).

**13.** Installation selon au moins l'une des revendications 10 à 12, caractérisée en ce que, comme installation de lavage, sont prévus des bacs d'arrosage (17a, 17b, 17c).

**14.** Installation selon au moins l'une des revendications 10 à 13, caractérisée en ce que, comme sécheur, on a prévu un tunnel de séchage (21) à haute fréquence.

**15.** Installation selon au moins l'une des revendications 10 à 14, caractérisée en ce que à la suite de la sortie du sécheur sont disposés l'un derrière l'autre un broyeur à couteaux (25) et un broyeur fin à tourbillonnement (27).

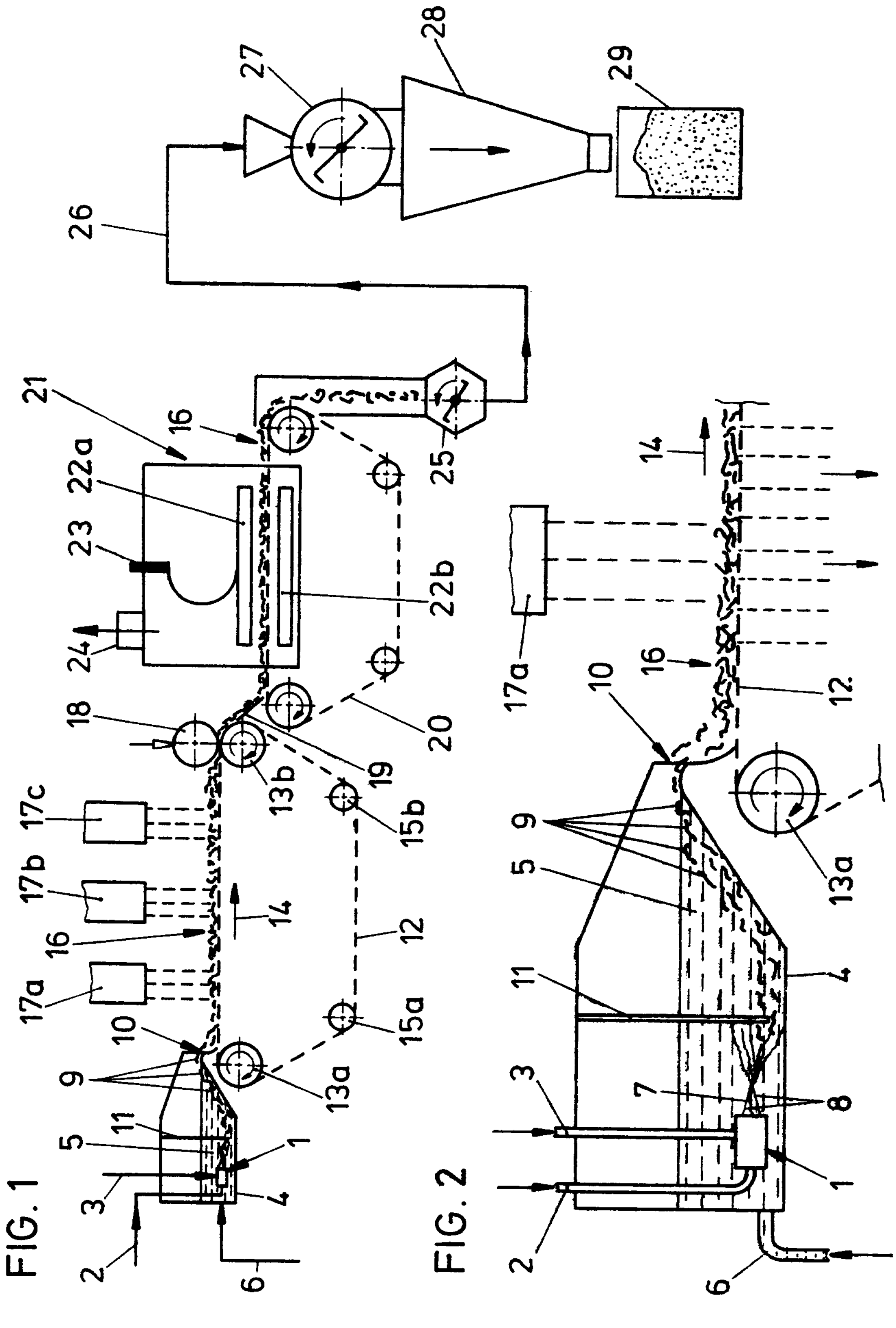
FIG. 1
2
3
4
5
6
1
11
9
10
13a
15a
12
16
14
17a
17b
17c
15b
13b
18
19
20
21
22a
22b
23
24
16
25
26
27
28
29
FIG. 2
2
3
6
1
7
8
11
4
5
9
10
13a
17a
16
12
14

FIG. 3

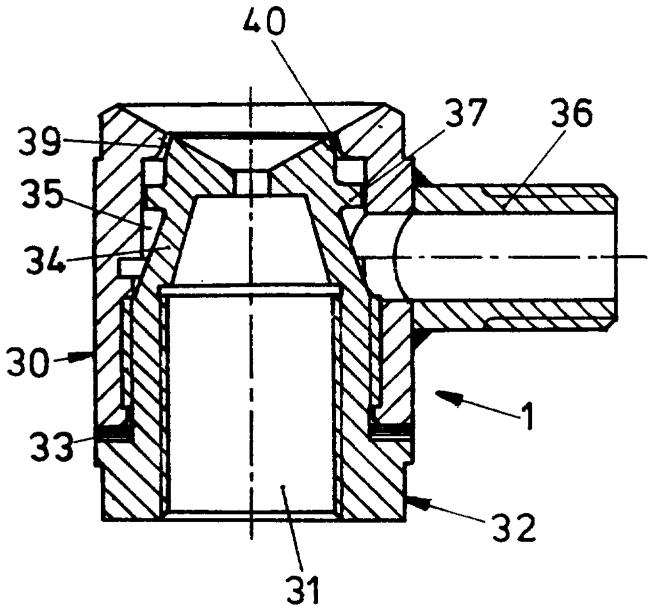


FIG. 4

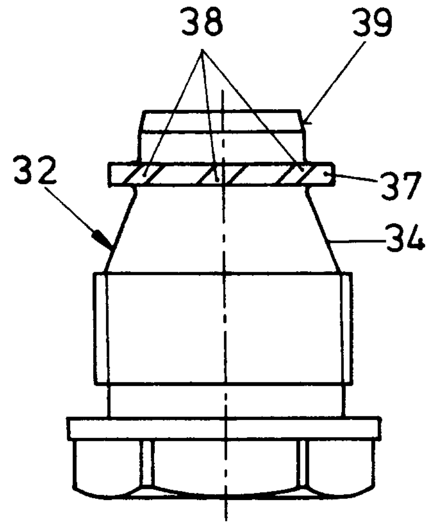


FIG. 5

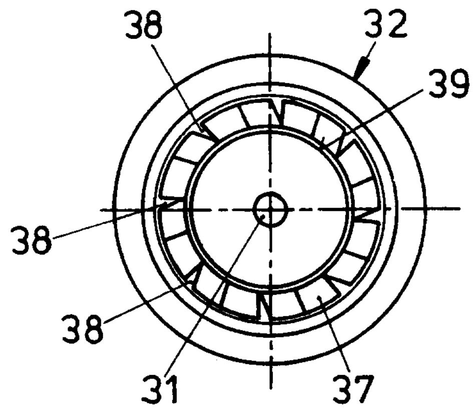


FIG. 6

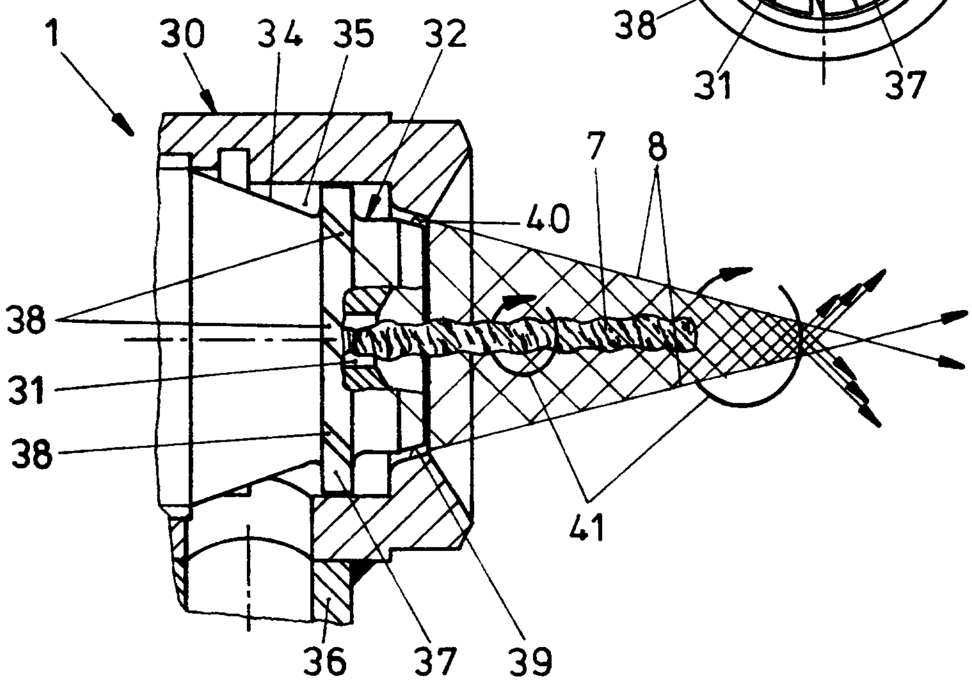

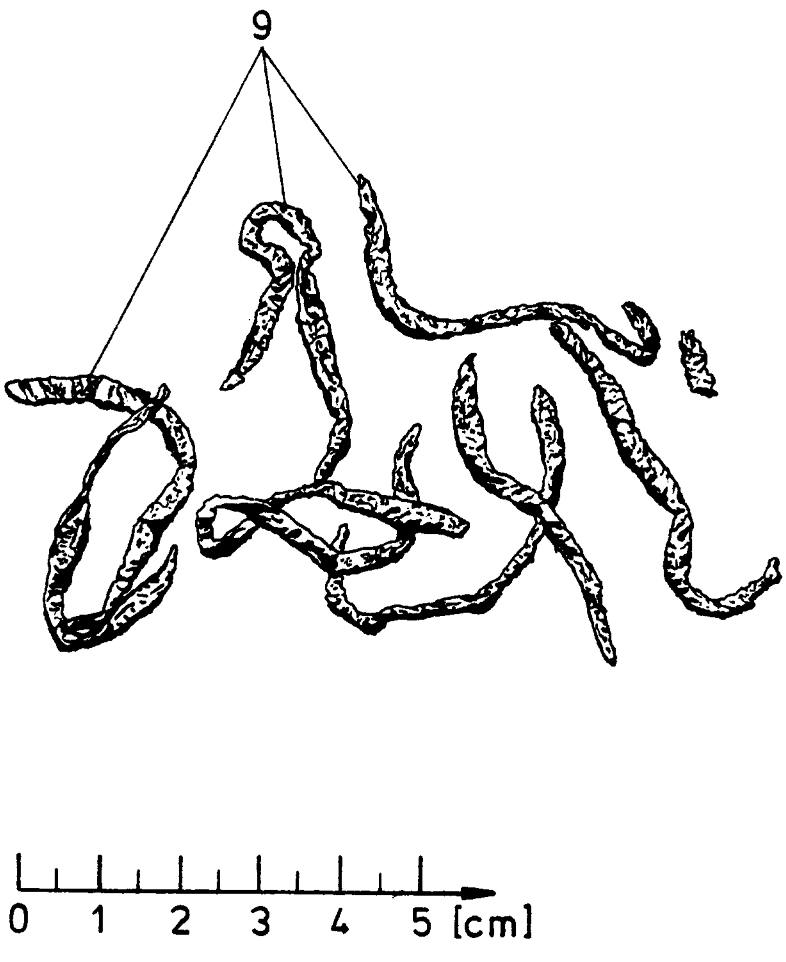


FIG. 7